(19) Europäisches Patentamt
European Patent Office
Office européen des brevets

(11) EP 4 503 158 A1

(12) EUROPEAN PATENT APPLICATION
published in accordance with Art. 153(4) EPC

(43) Date of publication:
05.02.2025 Bulletin 2025/06

(21) Application number: 23903895.3

(22) Date of filing: 08.12.2023

(51) International Patent Classification (IPC):
$H01M\ 4/04^{(2006.01)}$   $H01M\ 4/587^{(2010.01)}$
$B05C\ 5/02^{(2006.01)}$   $B05C\ 9/14^{(2006.01)}$
$H01M\ 4/02^{(2006.01)}$

(52) Cooperative Patent Classification (CPC):
B05C 5/02; B05C 9/14; H01M 4/02; H01M 4/04;
H01M 4/587; Y02E 60/10

(86) International application number:
PCT/KR2023/020176

(87) International publication number:
WO 2024/128692 (20.06.2024 Gazette 2024/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.12.2022 KR 20220173302

(71) Applicant: LG Energy Solution, Ltd.
Seoul 07335 (KR)

(72) Inventors:
• CHO, Jin Ho
  Daejeon 34122 (KR)
• KIM, Young Gon
  Daejeon 34122 (KR)
• YOON, Jong Su
  Daejeon 34122 (KR)
• JEON, Shin Wook
  Daejeon 34122 (KR)
• LEE, Taek Soo
  Daejeon 34122 (KR)

(74) Representative: Plasseraud IP
104 Rue de Richelieu
CS92104
75080 Paris Cedex 02 (FR)

(54) **APPARATUS FOR MANUFACTURING NEGATIVE ELECTRODE FOR SECONDARY BATTERY**

(57) A negative electrode manufacturing device for a secondary battery includes a slot die including an upper block, a lower block, and a slot provided through a gap between the upper block and the lower block configured to discharge the negative electrode slurry. The upper and lower blocks include an upper lip and a lower lip forming an outlet at respective front ends of the blocks. The upper and lower lips exhibit magnetism of the same polarity. The carbon-based negative electrode active material in the discharged negative electrode slurry may be applied with the crystal faces oriented at a predetermined angle with respect to the surface of the current collector. Therefore, the manufactured negative electrode has an excellent degree of orientation of the carbon-based negative electrode active material and is easily applied to a mass production process. Also provided is a method of manufacturing a negative electrode using the same.

【FIG. 3】

**Description**

[Technical Field]

The present disclosure relates to a negative electrode manufacturing device for secondary battery and a manufacturing method of a negative electrode for secondary battery using the same.
This application claims the benefit of priority based on Korean Patent Application No. 10-2022-0173302, filed on December 13, 2022, and the entire contents of the Korean patent application are incorporated herein by reference.

[Background]

Recently, secondary batteries have been widely applied not only in small devices such as portable electronics, but also in medium and large devices such as battery packs or power storage device in hybrid or electric vehicles.
Such a secondary battery refers to a chargeable and dischargeable power generating device comprising a stacked structure of a positive electrode/separator/negative electrode. Generally, the positive electrode includes a lithium metal oxide as a positive electrode active material, and the negative electrode includes a carbon-based negative electrode active material such as graphite, such that when the secondary battery is charged, lithium ions emitted from the positive electrode are adsorbed into the carbon-based negative electrode active material of the negative electrode, and when the secondary battery is discharged, lithium ions contained in the carbon-based negative electrode active material are adsorbed into the lithium metal oxide of the positive electrode, and charge and discharge are repeated.
The negative electrode active materials used in the negative electrode include graphite materials such as natural graphite and artificial graphite. Such graphite has a layered structure and is formed by stacking a plurality of layers in which carbon atoms form a network structure spread in a planar shape. During charging, lithium ions can invade from the edges of these graphite layers (the side where the layers overlap) and diffuse between the layers, and during discharging, lithium ions can dissociate and be released from the edges of the layers. In addition, since graphite has a lower electrical resistance in the side direction of the layer than in the stacked direction of the layer, a conduction path of diverted electrons is formed along the side direction of the layer.
In this regard, in a lithium secondary battery using graphite, a technology for magnetically orienting graphite contained in a negative electrode to improve the charging performance of the negative electrode has been conventionally proposed. Specifically, it has a configuration in which the [0,0,2] crystal faces of the graphite are oriented so that they are approximately vertical with respect to the current collector in a magnetic field at the time of forming the negative electrode and are fixed therein. In this case, since the edge of the graphite layer faces the positive electrode active layer, the insertion dissociation of the lithium ions is carried out smoothly and the conduction path of the electrons is shortened, which can improve the electronic conductivity of the negative electrode, thereby improving the charging performance of the battery.
Such an orientation of the graphite can be induced by applying a graphite-containing negative electrode slurry on the current collector and applying a magnetic field to the undried negative electrode slurry. However, in mass production of actual negative electrodes, it is difficult to secure sufficient time for applying a magnetic field to induce graphite alignment of the negative electrode slurry considering the production speed. In addition, if the intensity of the magnetic field applied to the negative electrode slurry applied to the electrode sheet is increased to solve this problem, the phenomenon of attraction of the graphite by the magnetic field occurs at the end of the magnetic field, and the orientation of the graphite aligned perpendicularly to the metal sheet collapses, resulting in a low orientation of the graphite in the final manufactured negative electrode active layer.
Therefore, there is a need for a negative electrode manufacturing technology that can realize a high orientation degree of graphite and is applicable to mass production of negative electrodes for secondary batteries.

[Related Art Document]

[Patent Document]

Korean Patent Laid-Open Publication No. 10-2018-0048131

[Technical Problem]

The present disclosure is directed to provide a negative electrode manufacturing technology that can realize a high degree of crystal orientation of a carbon-based negative electrode active material such as graphite contained in a negative electrode active layer, and at the same time is applicable to mass production of negative electrodes for secondary batteries.

[Technical Solution]

To solve the problems described above,

the present disclosure provides, in one aspect,
a negative electrode manufacturing device for secondary battery having an electrode sheet on which a negative electrode slurry containing a carbon-based negative electrode active material is applied,
the negative electrode manufacturing device for a secondary battery, comprising:

a slot die including an upper block, a lower block, and a slot for discharging a negative electrode slurry through a gap between the upper block and the lower block; and
including a coating roll for transferring electrode sheets coated with the negative electrode slurry discharged from the slot die;
wherein the upper block and the lower block comprise an upper lip and a lower lip forming an outlet at each front end, and the upper lip and the lower lip exhibit magnetism of the same polarity to provide a negative electrode manufacturing device for secondary battery.

In this case, the upper lip and the lower lip may have a structure including at least one of a permanent magnet and an electromagnet.

Also, a magnetic field having an intensity of 500G to 3,000G can be applied upon discharging the negative electrode slurry.

Further, the dual slot die may satisfy the following equation 1:

$$[\text{Equation 1}]$$

$$50 \leq G/M \leq 250$$

(In Equation 1,
G indicates the intensity of the magnetic field applied at the upper lip and the lower lip,
D indicates the separation distance of the upper and lower blocks (unit: $\mu$m)).

Further, the negative electrode manufacturing device may further include a drying part for drying the negative electrode slurry applied to the electrode sheet, wherein the drying part may be disposed in a position such that the negative electrode slurry discharged from the slot die can be reached within 20 seconds from the time it is applied to the electrode sheet.

Further, the present disclosure, in one aspect,
a method of manufacturing a negative electrode for secondary battery comprising:

applying a magnetically applied negative electrode slurry to an electrode sheet using a negative electrode manufacturing device according to the present disclosure described above,
wherein the negative electrode slurry comprises a carbon-based negative electrode active material.

In this case, an average thickness of the negative electrode slurry applied to the electrode sheet may be greater than a separation distance between the slot of the slot die provided in the negative electrode manufacturing device and the coating roll, and the average thickness of the negative electrode slurry applied to the electrode sheet may be 100 $\mu$m or more.

Further, applying the negative electrode slurry to the electrode sheet may be performed at a speed of 5 m/min to 100 m/min.

In addition, applying the negative electrode slurry to the electrode sheet may further include drying the applied negative electrode slurry to form a negative electrode active layer after applying the negative electrode slurry to the electrode sheet.

Here, the negative electrode active layer may have an alignment degree of the carbon-based negative electrode active material with respect to the surface of the electrode sheet of 0.9 or less, represented by the following equation 2:

[Equation 2]

$$O.I = I_{004}/I_{110}$$

in Equation 2,
$I_{004}$ indicates the area of the peak representing the [0,0,4] crystal face in an X-ray diffraction spectroscopy (XRD) measurement of the negative electrode active layer,
$I_{110}$ indicates the area of the peak representing the [1,1,0] crystal face in an X-ray diffraction spectroscopy (XRD) measurement of the negative electrode active layer.

[Advantageous Effects]

The negative electrode manufacturing device for secondary battery according to the present disclosure can be applied in a state in which a carbon-based negative electrode active material in a discharged negative electrode slurry is oriented close to perpendicular to a surface of a current collector. Accordingly, the manufactured negative electrode has the advantage of not only having an excellent degree of orientation of the carbon-based negative electrode active material, but also of easily being applied to a mass production process.

[Brief Description of the Drawings]

FIG. 1 is a schematic cross-sectional view illustrating a negative electrode manufacturing device for secondary battery according to the present disclosure.
FIG. 2 is a perspective view illustrating the structure of a single die coater provided in a negative electrode manufacturing device for secondary battery according to the present disclosure.
FIG. 3 is a conceptual diagram illustrating a principle by which a carbon-based negative electrode active material in a negative electrode slurry is applied to an electrode sheet in a self-aligned state by a single die coater according to the present disclosure.

[Detailed Description]

The present disclosure may have various modifications and various examples, and thus specific examples thereof will be described in detail below.
However, it should be understood that the present disclosure is not limited to the specific examples, and includes all modifications, equivalents, or alternatives within the spirit and technical scope of the present disclosure.
The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.
In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.
In addition, in the present disclosure, "including as a major component" can mean including at least 50 wt.% (or at least 50 vol.%), at least 60 wt.% (or at least 60 vol.%), at least 70 wt.% (or at least 70 vol.%), at least 80 wt.% (or at least 80 vol.%), at least 90 wt.% (or at least 90 vol.%), or at least 95 wt.% (or at least 95 vol.%) of a defined component relative to the total weight (or total volume) of the negative electrode active material. For example, "comprising graphite as a primary component as a negative electrode active material" may mean including at least 50 wt.%, at least 60 wt.%, at least 70 wt.%, at least 80 wt.%, at least 90 wt.%, or at least 95 wt.% of graphite, based on the total weight of the negative electrode active material, and in some cases may mean that the entire negative electrode active material is graphite, comprising at least 100 wt.% of graphite.
Moreover, in the present disclosure, "lip part" refers to an area including an upper lip of the upper block and a lower lip of the lower block. The lip part may include a spacing space formed between the plurality of lips, i.e., the area where each lip is disposed in the slot.

Similarly, in the present disclosure, "body part" refers to an area including an upper body of an upper block and a lower body of a lower block. The body part may include the spacing space formed between the plurality of bodies, that is, the area in which each body is disposed in the slot.

Hereinafter, the present disclosure will be described in more detail.

**Negative Electrode Manufacturing Device for Secondary Battery**

The present disclosure provides, in one aspect,

a negative electrode manufacturing device for secondary battery having an electrode sheet on which a negative electrode slurry containing a carbon-based negative electrode active material is applied,
the negative electrode manufacturing device for a secondary battery, comprising:

a slot die including an upper block, a lower block, and a slot for discharging a negative electrode slurry through a gap between the upper block and the lower block; and
a coating roll for transferring electrode sheets coated with the negative electrode slurry discharged from the slot die;
wherein the upper block and the lower block comprise an upper lip and a lower lip forming an outlet at each front end, and the upper lip and the lower lip exhibit magnetism of the same polarity.

The negative electrode manufacturing device for secondary battery according to the present disclosure is a device applied to manufacture a negative electrode used in a secondary battery, and has a configuration in which an electrode sheet is manufactured by applying a cathode slurry containing a carbon-based negative electrode active material onto a current collector.

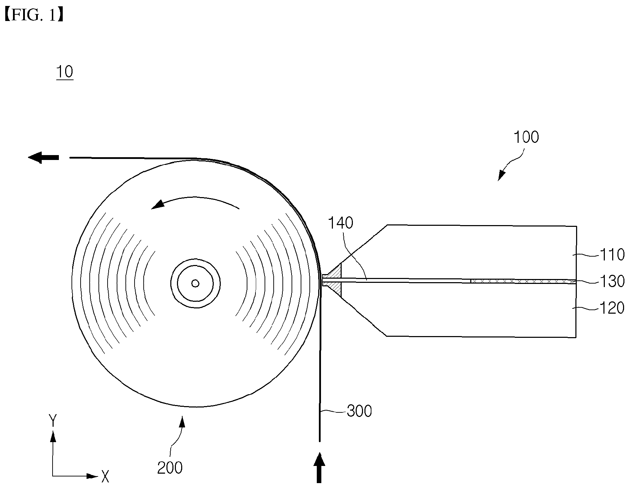

Specifically, FIG. 1 is a cross-sectional view schematically illustrating a structure of a negative electrode manufacturing device for secondary battery according to the present disclosure. Referring to FIG. 1, said negative electrode manufacturing device 10 comprises a slot die 100 and a coating roll 200, and has a structure in which a negative electrode slurry is applied to a surface while an electrode sheet 300 is moved by rotation of said coating roll 200.

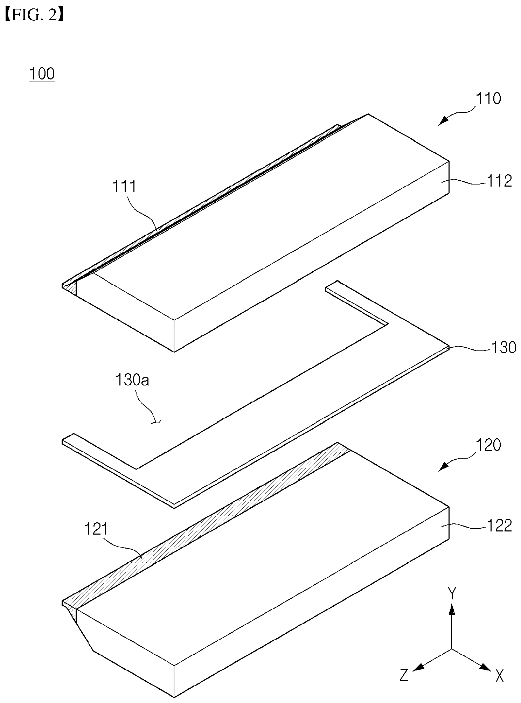

In this case, the slot die 100 may have a discharge slot 140 through which the negative electrode slurry is discharged formed between the upper die 110 and the lower die 120 where the upper die 110 and the lower die 120 face each other, as shown in FIG. 2. For example, the slot die 100 may have a spacer 130 interposed between the upper die 110 and the lower die 120 such that a gap is provided therebetween to form a passage through which the negative electrode slurry can fluidly move. In this case, the upper and lower height of the slots may be determined by the thickness (in the Y-axis direction) of the first spacer 141 and/or the second spacer 142 embodying the gap between each die, and the thickness of the first spacer 141 and/or the second spacer 142 may be controlled according to the use or capacity of the secondary battery. Specifically, the thickness of each spacer 141 and 142 may independently be from 50 $\mu$m to 2,000 $\mu$m, and more specifically, may be from 50 $\mu$m to 1,500 $\mu$m; from 500 $\mu$m to 1,200 $\mu$m; from 800 $\mu$m to 1,200 $\mu$m; from 80 $\mu$m to 200 $\mu$m; from 200 $\mu$m to 500 $\mu$m; or from 400 $\mu$m to 700 $\mu$m.

In addition, the spacer 130 has an opening 130a in which a first region is incised and may be interposed in all but one of the border regions of each opposite side of the upper die 110 and the lower die 120. Accordingly, a discharge outlet, in other words, a slot 140, through which the negative electrode slurry can be discharged to the outside is formed only between the front ends of the upper die 110 and the lower die 120. Here, the front end of the upper die 110 and the front end of the lower die 120 refer to the upper lip 111 and the lower lip 121, respectively, and the slot 140 through which the negative electrode slurry is discharged may be regarded as a place formed by the spacing between the upper lip 111 and the lower lip 121.

Further, the spacer 130 is preferably made of a material having a sealing property by functioning as a gasket to prevent the negative electrode slurry from leaking into the gap between the upper die 110 and the lower die 120, except for the area where the slot 140 is formed.

Meanwhile, the slot die 100 is a single die including the upper die 110 and the lower die 120, and can apply one type of negative electrode slurry in a single layer on the negative current collector. In this case, the upper die 110 and the lower die 120 may include an upper lip 111 and a lower lip 121 located at their respective front ends, and an upper body 112 and a lower body 122 extending from each lip and in close contact with a spacer 130 to form a passage through which the negative electrode slurry can fluidly move.

Further, the upper lip 111 and the lower lip 121 may exhibit magnetism having the same polarity. Accordingly, a magnetic field may be formed in the slot 140 formed by the upper lip 111 and the lower lip 121 in the same direction as the direction in which the negative electrode slurry is discharged.

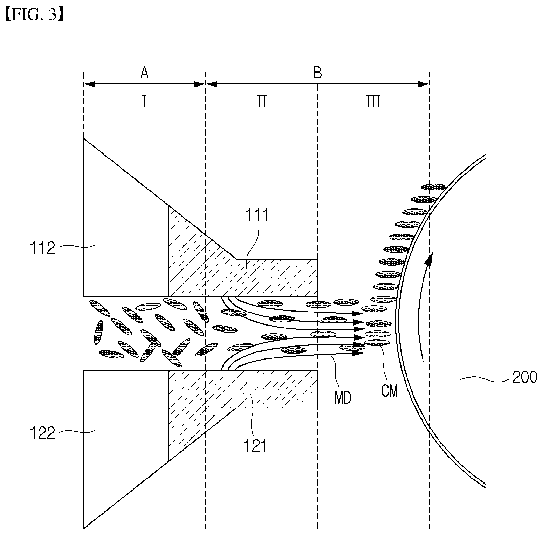

As shown in FIG. 3, if the path along which the negative electrode slurry is discharged and applied is divided into an unoriented section A and an oriented section B, the carbon-based negative electrode active material (CM, e.g.,

graphite) of the negative electrode slurry is not affected by the magnetic field and thus moves in a state having a high degree of freedom in the unoriented section A, including the spaced apart space (in other words, I: body part) of the upper body 112 and the lower body 122. However, the oriented section B includes the separation space of the upper lip 111 and the lower lip 121, which exhibit magnetism of the same polarity (in other words, II: lip part). In the lip part, a magnetic field direction (MD) may be formed in the same direction as the direction in which the negative electrode slurry is discharged due to the application of a repulsive force. Accordingly, before the negative electrode slurry is discharged onto the negative electrode current collector, the carbon-based negative electrode active material (CM), in other words, graphite, contained in the negative electrode slurry may be oriented such that the [0,0,2] crystal faces are approximately horizontal with respect to the negative electrode current collector. Since the graphite so oriented is applied on the negative electrode current collector while maintaining the oriented state (in other words, corresponding to the III: coating region), it can have a high degree of orientation without a separate magnetic field application after application of the negative electrode slurry.

In this case, the upper lip 111 and lower lip 121 may include electromagnets and/or permanent magnets to indicate magnetism. The electromagnets may include both direct current electromagnets and alternating current electromagnets. Further, the permanent magnets may include both magnets having ferromagnetic properties and magnets having soft magnetic properties, including NdFeB-based magnets, SmCo-based magnets, Ferrite magnets, Alnico magnets, FeCrCo-based magnets, Bond magnets (Nd-Fe-B, Sm-Fe-N, Sm-Co, Ferrite), and the like.

Further, since the negative electrode manufacturing device applies a magnetic field before the negative electrode slurry is discharged onto the electrode sheet, a magnetic field of a lower intensity can be applied compared to a case where the magnetic field is applied after the negative electrode slurry is applied onto the electrode sheet. In this case, the magnetic field strength can satisfy a predetermined range. In other words, the upper lip 111 and the lower lip 121 may apply a magnetic field satisfying a predetermined range of intensity at the time of discharging the negative electrode slurry. Specifically, the upper lip 111 and the lower lip 121 may be subjected to a magnetic field having the same polarity. In this case, the applied magnetic field may have a strength of 500 G to 3,000 G (Gauss), more specifically, 500 G to 2,500 G; 500 G to 2,000 G; 500 G to 2,000 G; 500 G to 1,500 G; 1,000 G to 2,000 G; 2,000 G to 2,500 G; 2,000 G to 3,000 G; 500 G to 1,500 G; or 500 G to 900 G.

The present disclosure can realize uniform crystal orientation of the carbon-based negative electrode active material before the negative electrode slurry is discharged through the slot 140 by adjusting the intensity of the magnetic field applied at the upper lip 111 and the lower lip 121 to the above range. In addition, the present disclosure can maintain the degree of orientation such that the uniformly crystal oriented carbon-based negative electrode active material is applied on the negative electrode current collector without any change in the degree of orientation after being discharged. Moreover, the present disclosure can prevent the intensity of the magnetic field applied at the upper lip 111 and the lower lip 121 from exceeding the above range such that the separation distance between the upper lip 111 and the lower lip 121 becomes smaller, thereby making the discharge of the negative electrode slurry difficult.

In addition, the slot die 100 is crystal oriented so that the carbon-based negative electrode active material contained in the negative electrode slurry is perpendicular to the surface of the electrode sheet 300, or negative electrode current collector, and remains oriented thereafter, or negative electrode current collector) to be applied to the electrode sheet 300, the intensity G of the magnetic field applied at the upper lip 111 and the lower lip 121 and the width of the slot 140, in other words, the ratio of the separation distance D of the upper die (upper block) 110 and the lower die (lower block) 120, can be controlled to satisfy a predetermined range. Specifically, the slot die 100 may satisfy Equation 1 below:

$$[\text{Equation } 1]$$

$$50 \leq G/M \leq 250$$

in Equation 1,
G indicates the intensity of the magnetic field applied at the upper lip and the lower lip,
D indicates the separation distance of the upper and lower blocks (unit: $\mu$m).

The orientation of the carbon-based negative electrode active material contained in the negative electrode slurry may be affected by the intensity of the magnetic field applied; the spacing distance of the magnets through which the magnetic field is applied, and the like. Accordingly, the present disclosure may satisfy Equation 1 by setting the ratio (G/D) between the intensity (G) of the magnetic field applied at the upper lip 111 and the lower lip 121 and the separation distance (D) of the upper die (upper block) 110 and the lower die (lower block) 120 to 0.3 to 5 so that the carbon-based negative electrode active material contained in the negative electrode slurry can be applied with the crystal face oriented with respect to the surface of the electrode sheet 300. More specifically, the slot die 100 may satisfy Equation 1 as 0.3 to 3.0 (i.e., $0.3 \leq G/D \leq 3.0$); 0.4 to 2.6 (i.e., $0.4 \leq G/D \leq 2.6$); 0.5 to 1.5 (i.e., $0.5 \leq G/D \leq 1.5$); 1.0 to 3.0 (i.e., $1.0 \leq G/D \leq 3.0$); 1.1 to 1.9 (i.e., $1.1 \leq G/D \leq 1.9$); 1.5 to 3.0 (i.e., $1.5 \leq G/D \leq 3.0$); 2.0 to 4.0 (i.e., $2.0 \leq G/D \leq 4.0$); 0.8 to 1.2 (i.e., $0.8 \leq G/D \leq 1.2$); 1.2 to 1.

6 (that is, 1.2 ≤ G/D ≤ 1.6); 0.4 to 0.9 (that is, 0.4 ≤ G/D ≤ 0.9); or 1.1 to 1.5 (that is, 1.1 ≤ G/D ≤ 1.5).

Meanwhile, the slot 140 formed by the upper lip 111 and the lower lip 121 may be positioned such that the negative electrode slurry is discharged perpendicular to the surface of the negative current collector. To this end, the slot die 100 may be positioned to be perpendicular to the surface of the electrode sheet 300. Preferably, the slot die 100 may include a rotatably arranged coating roll 200 facing the slot 140 of the slot die 100, as shown in FIG. 1, such that the electrode sheet 300, or negative electrode current collector, may move with the rotation of the coating roll 200 to apply the negative electrode slurry to the surface.

The coating roll 200 may exhibit magnetism on its surface such that the carbon-based negative electrode active material of the negative electrode slurry being applied to the electrode sheet 300 remains oriented within the slot die 100. In this case, the magnetism may have a different polarity from the upper lip 111 and the lower lip 121 of the slot die 100. The present disclosure can prevent the crystal orientation of the carbon-based negative electrode active material applied to the surface of the electrode sheet 300 from being reduced by imparting a magnetism having a polarity different from the upper lip 111 and the lower lip 121 of the slot die 100 to the surface of the coating roll 200. Such magnetism may be realized by introducing one or more of a permanent magnet and an electromagnet to the surface of the coating roll 200.

Further, the negative electrode manufacturing device 10 according to the present disclosure may further include a drying part (not shown) for drying the negative electrode slurry applied to the electrode sheet 300, wherein the drying part may be disposed in a position such that the negative electrode slurry discharged from the slot die 100 reaches the electrode sheet within 20 seconds from the time it is applied to the electrode sheet, specifically 0.01 seconds to 20 seconds; 0.01 seconds to 15 seconds; 0.01 seconds to 10 seconds; or 0.01 seconds to 5 seconds.

The drying part performs the function of removing the solvent contained in the negative electrode slurry to form a negative electrode active layer, and also performs the function of fixing the carbon-based negative electrode active material oriented inside the negative electrode slurry. For this, the drying part may be arranged in a position to dry the negative electrode slurry before the crystal orientation of the carbon-based negative electrode active material applied to the surface of the electrode sheet 300 is reduced.

In addition, the drying part is formed by including a wall (not shown) that blocks the periphery except for the inlet and outlet for bringing in and taking out the electrode sheet 300 to which the negative electrode slurry is applied, and a dryer (not shown) for drying the electrode sheet on the wall of the side from which the electrode sheet 300 to which the negative electrode slurry is applied is taken out.

When the electrode sheet 300 on which the negative electrode slurry is applied enters through the inlet of the drying part, it receives energy such as light, wavelength, heat, etc. supplied from the opposite wall. Therefore, the wall is preferably made of an insulating material so that the energy inside can be transferred to the outside and prevent heat loss from occurring.

Further, the dryer can be used without being particularly limited as long as it is capable of applying energy such as light, wavelength, heat, and the like and is conventionally applied in the art. For example, the dryer may be used as an ultraviolet dryer, a near-infrared dryer, a far-infrared dryer, a hot air dryer, a vacuum oven, or the like, singly or in combination.

The negative electrode manufacturing device according to the present disclosure has the above-described configuration to induce crystal orientation of the carbon-based negative electrode active material before the negative electrode slurry is discharged onto the negative electrode sheet, so that the carbon-based negative electrode active material can be applied in a state in which the carbon-based negative electrode active material is oriented close to perpendicular to the surface of the negative electrode current collector. Accordingly, the carbon-based negative electrode active material of the manufactured negative electrode has an excellent degree of orientation. Furthermore, since the above negative electrode manufacturing device does not require a separate orientation process for orienting the carbon-based negative electrode active material after applying the negative electrode slurry, it has the advantage of not requiring additional facilities for manufacturing the negative electrode, as well as being easy to apply to a mass production process.

## Manufacturing Method of Negative Electrode for Secondary Battery

The present disclosure also provides, in one aspect,

a method of manufacturing a negative electrode for secondary battery comprising:

applying a magnetically applied negative electrode slurry to an electrode sheet using a negative electrode manufacturing device according to the present disclosure,
wherein the negative electrode slurry comprises a carbon-based negative electrode active material.

The manufacturing method of a negative electrode for secondary battery according to the present disclosure is a method of manufacturing a negative electrode using the negative electrode manufacturing device of the present disclosure described above. The manufacturing method of the negative electrode includes applying a magnetically applied negative electrode slurry to an electrode sheet. In other words, the manufacturing method is characterized in that the magnetic field application to the negative electrode slurry containing a carbon-based negative electrode active material and the application of the negative electrode slurry on the electrode sheet (i.e., the current collector) proceed simultaneously. Accordingly, the above manufacturing method has the advantage of not separately proceeding with the crystal orientation of the carbon-based negative electrode active material after the application of the negative electrode slurry, and thus is economical because the process is simple, and is easy to apply to mass production because of its excellent processability.

Here, the negative electrode slurry may comprise a carbon-based negative electrode active material that is magnetically oriented by the negative electrode manufacturing device according to the present disclosure as described above, wherein the magnetic orientation may be performed by forming a magnetic field close to perpendicular to the surface of the electrode sheet.

In addition, the manufacturing method may control the separation distance of the slots of the slot die provided in the negative electrode manufacturing device, in other words, the lip part including the upper lip and the lower lip, and the coating roll according to the average thickness of the negative electrode slurry to be applied to the electrode sheet so that the crystal orientation of the carbon-based negative electrode active material is maintained.

Even if the carbon-based negative electrode active material is oriented before discharging so that a particular crystal face has a predetermined angle with respect to the surface of the electrode sheet, the angle or degree of orientation may change depending on the fluid motion according to the angle at which the negative electrode slurry is applied to the surface of the electrode sheet at the time of discharging. Therefore, according to the present disclosure, the average thickness of the negative electrode slurry applied to the electrode sheet may be adjusted to be greater than a separation distance between a slot of a slot die provided in the negative electrode manufacturing device and a coating roll in order to minimize a fluid motion depending on an angle at which the negative electrode slurry is applied at the time of discharge. For example, the average thickness of the negative electrode slurry applied to the electrode sheet may be adjusted to be 1.01 to 2.00 times; 1.01 to 1.80 times; 1.01 to 1.50 times; 1.1 to 1.5 times; or 1.2 to 1.9 times the spacing distance of the lip part of the slot die and the coating roll provided in the negative electrode manufacturing device. In addition, the average thickness of the negative electrode slurry applied to the electrode sheet may be 100 $\mu$m or more, more specifically, 100 $\mu$m or more than 300 $\mu$m or less; 110 $\mu$m or more than 190 $\mu$m or less; 200 $\mu$m or more than 300 $\mu$m or less; 150 $\mu$m or more than 230 $\mu$m or less; 100 $\mu$m or more than 250 $\mu$m or less; or 100 $\mu$m or more than 200 $\mu$m or less.

Further, applying the magnetically applied negative electrode slurry to the electrode sheet may be performed on the electrode sheet being transferred at a predetermined speed. The transfer speed may be the same as the speed at which the negative electrode slurry is applied to the electrode sheet. For example, applying the negative electrode slurry to the electrode sheet may be performed at a speed of 5 to 100 m/min, more particularly at a speed of 5 m/min to 35 m/min; 10 m/min to 35 m/min; 20 m/min to 35 m/min; 10 m/min to 30 m/min; 5 m/min to 20 m/min; 5 m/min to 25 m/min; or 15 m/min to 25 m/min.

The present disclosure can prevent a uniform application of the negative electrode slurry on the surface of the electrode sheet due to a significantly slower application speed by performing applying the negative electrode slurry within the above speed range. Along with this, the process efficiency and productivity can be prevented from being reduced; and the crystal alignment state of the carbon-based negative electrode active material present in the negative electrode slurry can be prevented from being disrupted due to the excessively high speed, resulting in a reduced degree of orientation.

In addition, the method of manufacturing a negative electrode for a secondary battery according to the present disclosure may further include applying a magnetically applied negative electrode slurry to an electrode sheet, followed by drying the applied negative electrode slurry to form a negative electrode active layer.

Forming a negative electrode active layer refers to a process of fixing a carbon-based negative electrode active material contained in a negative electrode slurry onto an electrode sheet by drying the negative electrode slurry. This step may be applied, without limitation, in any manner in which the carbon-based negative electrode active material in the cathode slurry applied to the electrode sheet can be fixed with minimal loss of its degree of orientation with respect to the surface of the electrode sheet.

Specifically, the drying may be applied by applying energy such as light, wavelength, heat, or the like, and may be performed by using an ultraviolet dryer, a near-infrared dryer, a far-infrared dryer, a hot air dryer, a vacuum oven, or the like, singly or in combination.

Meanwhile, the carbon-based negative electrode active material contained in the negative electrode slurry may include one conventionally applied as a carbon-based negative electrode active material in a lithium secondary battery. Specifically, the carbon-based negative electrode active material refers to a material having carbon atoms as a main component. Such a carbon-based negative electrode active material may include graphite. The graphite may include one or more of natural graphite, artificial graphite, but preferably natural graphite, or a mixture of natural graphite and artificial graphite.

Preferably, the carbon-based negative electrode active material is a spherical graphite assembly formed by a plurality of flake graphite. The flake graphite may include natural graphite, artificial graphite, mesophase calcined carbon (bulk mesophase) based on tar and pitch, graphitized coke (raw coke, green coke, pitch coke, needle coke, petroleum coke, etc.), and the like, and is preferably assembled using a plurality of highly crystalline natural graphite. Furthermore, one graphite assembly may be formed by assembling from 2 to 100, preferably from 3 to 20, pieces of flake-shaped graphite.

Such carbon-based negative electrode active material, specifically graphite, may have a spherical particle shape, wherein the sphericity of the graphite particles may be greater than or equal to 0.75, such as 0.75 to 1.0; 0.75 to 0.95; 0.8 to 0.95; or 0.90 to 0.99. Here, "sphericity" may mean the ratio of the shortest diameter (short diameter) to the longest diameter (long diameter) of any diameter passing through the center of the particle, wherein a sphericity of 1 means that the particle has a spherical shape. The sphericity degree may be measured by a particle shape analyzer. The present disclosure can realize a high electrical conductivity of the negative electrode active layer by realizing a shape of the carbon-based negative electrode active material close to a spherical shape, thereby improving the capacity of the battery. The present disclosure also has the advantage that the specific surface area of the negative electrode active material can be increased, and thus the adhesion between the negative electrode active layer and the current collector can be improved.

Further, the carbon-based negative electrode active material may exhibit an average particle diameter ($D_{50}$) of 0.5 $\mu$m to 10 $\mu$m, and more particularly, may exhibit an average particle diameter ($D_{50}$) of 2 $\mu$m to 7 $\mu$m; 0.5 $\mu$m to 5 $\mu$m; or 1 $\mu$m to 3 $\mu$m,

The average particle diameter of spherical natural graphite may be advantageous to have a smaller particle diameter to maximize the disorder in the direction of expansion for each of the particles to prevent the particles from swelling upon charging of the lithium ions. However, when the particle diameter of natural graphite is less than 0.5 $\mu$m, a large amount of binder is required due to the increase in the number of particles per unit volume, and the sphericity degree and sphericity transport number may be lower. On the other hand, when the maximum particle diameter exceeds 10 $\mu$m, the expansion becomes severe, and the binding property between the particles and the binding property of the particles to the current collector decreases as the charge and discharge are repeated, which may significantly reduce the cycling characteristics.

In addition, the negative electrode slurry may further include conductive materials, binders, thickeners, and the like in addition to the carbon-based negative electrode active material, and these may be applied as those conventionally used in the art.

The conductive material may include one or more of carbon black, acetylene black, ketene black, carbon nanotubes, carbon fibers, and the like, but is not limited thereto.

As one example, said negative electrode active layer may contain carbon black, carbon nanotubes, carbon fibers, and the like as conductive materials alone or in combination.

In this case, the content of the conductive material may be 0.1 to 10 parts by weight, and more specifically, 0.1 to 8 parts by weight, 0.1 to 5 parts by weight, 0.1 to 3 parts by weight, 2 to 6 parts by weight, or 0.5 to 2 parts by weight, relative to the total 100 parts by weight of the negative electrode active layer. The present disclosure can control the content of the conductive material to a range as described above, thereby preventing the resistance of the negative electrode from increasing due to a low content of the conductive material, thereby reducing the charging capacity. Also, it is possible to prevent a problem in which the charging capacity is reduced due to a decrease in the content of the negative electrode active material due to an excessive amount of conductive material, or a problem in which the rapid charging characteristic is reduced due to an increase in the loading amount of the negative electrode active layer.

Further, the binder may be suitably applied as a component that assists in the bonding of the negative electrode active material to the conductive material and the bonding to the negative electrode current collector without degrading the electrical properties of the electrode, but more particularly, the binder may be applied to vinylidene fluoride-hexafluoropropylene copolymer (PVDF-co-HFP), polyvinylidenefluoride (PVdF), polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer, sulfonated ethylene-propylene-diene monomer, styrene butadiene rubber, and fluorinated rubber, including any one or more thereof.

The content of the binder may be from 0.1 to 10 parts by weight, more specifically from 0.1 to 8 parts by weight, from 0.1 to 5 parts by weight, from 0.1 to 3 parts by weight, or from 2 to 6 parts by weight, based on a total of 100 parts by weight of the negative electrode slurry. The present disclosure can control the content of the binder contained in the negative electrode slurry to the above range, thereby preventing the adhesion of the negative electrode active layer from deteriorating due to a low content of the binder or the electrical properties of the electrode from deteriorating due to an excess of the binder.

The method of manufacturing a sheet for a negative electrode of a secondary battery according to the present disclosure has the advantage of having the above-described composition, which enables the carbon-based negative electrode active material of the applied negative electrode slurry on the current collector to be uniformly aligned with a high degree of orientation.

## Secondary Battery Negative Electrode

Further, the present disclosure provides, in one aspect,
a secondary battery negative electrode prepared by the method described above.

The negative electrode for a lithium secondary battery according to the present disclosure includes a negative electrode active layer including a carbon-based negative electrode active material as a main component on at least one side of the current collector. The negative electrode active layer refers to a layer that embodies the electrical activity of the negative electrode. The negative electrode active layer is prepared by applying an electrode slurry including a carbon-based negative electrode active material embodying an oxidation reduction reaction electrochemically during charging and discharging of the battery to both sides of the current collector, followed by drying and rolling. Here, the negative electrode active layer is formed by applying and drying a magnetically applied negative electrode slurry to an electrode sheet using the aforementioned negative electrode manufacturing device, wherein the main component, a carbon-based negative electrode active material, is characterized by a high crystal orientation with respect to the surface of the electrode sheet, and thereby the negative electrode having the negative electrode active layer has a high energy density and charge/discharge performance.

Specifically, the negative electrode according to the present disclosure can be aligned such that the carbon-based negative electrode active material contained in the negative electrode active layer has a predetermined angle with respect to the electrode sheet (or the negative electrode current collector). Such alignment of the carbon-based negative electrode active material may serve to reduce the degree of disorder in the negative electrode active layer, thereby reducing the electrode resistance and providing a movement path for the lithium ions. At this time, the crystal orientation of the carbon-based negative electrode active material (e.g., graphite) may be determined by crystallographic analysis of the carbon-based negative electrode active material contained in the negative electrode active layer.

In one example, the negative electrode active layer may be such that the carbon-based negative electrode active material is aligned in a certain direction with respect to the current collector, such that an X-ray diffraction spectroscopy (XRD) measurement of the negative electrode active layer satisfies an average alignment degree of the carbon-based negative electrode active material of 0.9 or less, as represented by Equation 2 below:

$$[\text{Equation 2}]$$

$$O.I = I_{004}/I_{110}$$

in Equation 2,
$I_{004}$ indicates the area of the peak representing the [0,0,4] crystal face in an X-ray diffraction spectroscopy (XRD) measurement of the negative electrode active layer,
$I_{110}$ indicates the area of the peak representing the [1,1,0] crystal face in an X-ray diffraction spectroscopy (XRD) measurement of the negative electrode active layer.

The above equation 2 may be an indicator of the degree to which the crystal structure of the spherical carbon-based negative electrode active material is aligned in a certain direction, specifically with respect to the surface of the negative electrode current collector, upon X-ray diffraction measurement. More specifically, the negative electrode active layer may be aligned with the peaks for the carbon-based negative electrode active material, graphite, at $2\theta=26.5\pm0.2°$, $42.4\pm0.2°$, $43.4\pm0.2°$, $44.6\pm0.2°$, $54.7\pm0.2°$, and $77.5\pm0.2°$, which represent the [0,0,2] face, [1,0,0] face, [1,0,1]R face, [1,0,1]H face, [0,0,4] face, and [1,1,0] face, respectively. Also, the peak appearing at $2\theta=43.4\pm0.2°$ may be viewed as an overlap of the peaks corresponding to the [1,0,1]R face of a carbon-based negative electrode active material and the [1,1,1] face of a current collector, such as copper (Cu).

Among them, the degree of alignment (O.I.) of the carbon-based negative electrode active material can be measured by the ratio of the area of the peak at $2\theta=77.5\pm0.2°$ representing the [1,1,0] face and the peak at $2\theta=54.7\pm0.2°$ representing the [0,0,4] face, specifically, the ratio of the areas obtained by integrating the intensities of the peaks. Here, since the peak at $2\theta=54.7\pm0.2°$ is a peak representing the [0,0,4] face having an inclination with the negative electrode current collector among the crystal faces of graphite, the degree of alignment (O.I.) may mean that the inclination with respect to the surface of the negative electrode current collector is close to 90° when the value is close to 0, and the inclination with respect to the surface of the negative electrode current collector is close to 0° or 180° when the value is larger. In this aspect, the negative electrode active layer according to the present disclosure may have a lower degree of alignment (O.I.) of the carbon-based negative electrode active material compared to a case where the carbon-based negative electrode active material is not self-aligned, since the carbon-based negative electrode active material is aligned such that the carbon-based negative electrode active material has an angle close to perpendicular to the negative current collector, such as an angle of 60° or more, 70° or more, 70-90°, 80-90°, 65-85°, or 70-85° relative to the negative current collector.

The negative electrode according to the present disclosure may have an alignment degree index (O.I.) according to Formula 2 of 0.9 or less when measured by X-ray diffraction with respect to a surface of the negative electrode active layer, more specifically, it may be 0.8 or less; 0.7 or less; 0.6 or less; 0.1 to 0.9; 0.2 to 0.8; 0.3 to 0.7; 0.2 to 0.6; or 0.4 to 0.6.

Meanwhile, the average thickness of said negative electrode active layer may be from 50 $\mu$m to 300 $\mu$m, more specifically from 50 $\mu$m to 250 $\mu$m; from 100 $\mu$m to 250 $\mu$m; or from 100 $\mu$m to 200 $\mu$m. The present disclosure can not only increase the energy density of the electrode by adjusting the average thickness of the negative electrode active layer to the above range but can also uniformly control the disorder of the carbon-based negative electrode active material contained in the negative electrode active layer.

In addition, the negative electrode current collector is not particularly limited as long as it has a high conductivity without causing chemical changes in the battery. For example, copper, stainless steel, nickel, titanium, calcined carbon, and the like can be used as the negative electrode collector, and in the case of copper or stainless steel, a surface treatment with carbon, nickel, titanium, silver, and the like can also be used. Moreover, the average thickness of the said negative electrode current collector may be suitably applied from 1 $\mu$m to 500 $\mu$m in consideration of the conductivity and total thickness of the negative electrode to be manufactured.

Hereinafter, the present disclosure will be described in more detail by way of examples and experimental examples.

However, the following examples and experimental examples are only illustrative of the present disclosure, and the present disclosure is not limited to the following examples and experimental examples.

## Examples 1 to 5 and Comparative Examples 1 to 2: Manufacturing Sheet for Secondary Battery Negative Electrode

A negative electrode active material was prepared by mixing natural graphite and artificial graphite in a 2:8 weight ratio, and carbon black as a conductive material and carboxymethylcellulose (CMC) and styrene butadiene rubber (SBR) as binders. A negative electrode slurry was prepared by mixing 95 wt.% of mixed graphite, 1 wt.% of carbon black, 1.5 wt.% of carboxymethylcellulose (CMC) and 2.5 wt.% of styrene butadiene rubber (SBR) with water to make the solids 50%.

Separately, a negative electrode manufacturing device was prepared including a slot die in which an upper block, a spacer, and a lower block are sequentially stacked to provide a slot in the front end through which the negative electrode slurry can be discharged, and a coating roll arranged to face the slot in the slot die. At this time, the above negative electrode manufacturing device was adjusted such that i) the polarity type of the magnetism imparted to the upper lip of the upper block and the lower lip of the lower block; ii) the polarity type of the magnetism imparted to the coating roll; and iii) the ratio (G/D) between the intensity (G) of the magnetic field applied at the upper lip and the lower lip and the separation distance (D) of the upper block and the lower block were as shown in Table 1 below.

The previously prepared negative electrode slurry was injected into the prepared negative electrode manufacturing device, and the negative electrode slurry was applied to the surface of a copper thin plate (thickness: 8 $\mu$m) being transported at a speed (M) of 10 m/min. Then, hot air was continuously applied to the applied negative electrode slurry to dry it to form a negative electrode active layer.

[Table 1]

|  | Upper lip | Lower lip | Coating roll | G/D |
|---|---|---|---|---|
| Example 1 | N pole | N pole | - | 800G/1,000$\mu$m |
| Example 2 | N pole | N pole | - | 1,500G/1,000$\mu$m |
| Example 3 | N pole | N pole | - | 2,200G/1,000$\mu$m |
| Example 4 | N pole | N pole | - | 1,500G/2,500$\mu$m |
| Example 5 | N pole | N pole | S pole | 1,500G/1,000$\mu$m |
| Comparative Example 1 | - | - | - | -/1,000$\mu$m |
| Comparative Example 2 | - | - | S pole | -/1,000$\mu$m |

## Experimental Example

The orientation exhibited by the carbon-based negative electrode active material of the cathodes for secondary batteries manufactured using the negative electrode manufacturing device according to the present disclosure was evaluated.

Specifically, X-ray diffraction spectroscopy (XRD) of any three points of the negative electrode active layer was performed for each negative electrode prepared in Examples 1 to 5 and Comparative Examples 1 to 2, and the spectra were measured. The measurement conditions for X-ray diffraction spectroscopy (XRD) were as follows:

- Target: Cu(Ka-ray) graphite single-colorization device
- Slit: Emission slit = 1 degree, Reception slit = 0.1 mm, Scattering slit = 1 degree
- Measurement section: [1,1,0] face: 76.5° < 2θ < 78.5° / [0,0,4] face: 53.5° < 2θ < 56.0° .

From the spectrum measured under the above conditions, the alignment degree (O.I.) of each carbon-based negative electrode active material according to Equation 2 was calculated, and the average alignment degree was obtained from the alignment degrees (O.I.) of the carbon-based negative electrode active materials of the three points calculated. The results are shown in Table 2.

$$[\text{Equation 2}].$$

$$O.I = I_{004}/I_{110}$$

In Equation 2,
$I_{004}$ indicates the area of the peak representing the [0,0,4] crystal face in the X-ray diffraction spectroscopy (XRD) measurement of the negative electrode active layer, and
$I_{110}$ indicates the area of the peak representing the [1,1,0] crystal face in an X-ray diffraction spectroscopy (XRD) measurement of the negative electrode active layer.

[Table 2]

|  | Average Alignment Degree |
|---|---|
| Example 1 | 0.78 |
| Example 2 | 0.51 |
| Example 3 | 0.54 |
| Example 4 | 0.65 |
| Example 5 | 0.43 |
| Comparative Example 1 | 5.24 |
| Comparative Example 2 | 1.97 |

As shown in Table 2 above, it can be seen that the negative electrode manufactured using the negative electrode manufacturing device according to the present disclosure has a high degree of orientation of the carbon-based negative electrode active material contained in the negative electrode active layer.

This means that if the front ends of the upper block and the lower block comprising the slot die, in other words, the lip parts, are magnetized with the same polarity at the time of discharging the negative electrode slurry, the crystal faces of the carbon-based negative electrode active material are oriented close to vertical before the negative electrode slurry is applied to the electrode sheet (or the negative electrode current collector), and the carbon-based negative electrode active material is applied and maintained on the electrode sheet in such an orientation-induced state to form a negative electrode active layer.

From these results, the negative electrode manufacturing device according to the present disclosure has the advantage that the carbon-based negative electrode active material in the discharged negative electrode slurry can be applied in a state in which the carbon-based negative electrode active material is oriented at a predetermined angle with respect to the surface of the current collector, so that the carbon-based negative electrode active material of the manufactured negative electrode not only has an excellent degree of orientation, but also has the advantage of being easy to apply to a mass production process.

As above, the present disclosure has been described in more detail through the drawings and examples. However, since the configuration described in the drawings or examples described herein is merely one example of the present disclosure and do not represent the overall technical spirit of the technology, it should be understood that the disclosure covers various equivalents, modifications, and substitutions at the time of filing of this application.

Thus, the technical scope of the present disclosure is not limited to what is described in the detailed description of the specification, but should be determined by the claims of the patent.

[Description of Reference Numerals]

| | | | |
|---|---|---|---|
| 10: | negative electrode manufacturing device for secondary battery according to the present disclosure | | |
| 100: | slot die | 110: | upper die |
| 111: | upper lip | 112: | upper body |
| 120: | lower die | 121: | lower lip |
| 122: | lower body | 130: | spacer |
| 130a: | opening | 140: | slot |
| 200: | coating roll | 300: | electrode sheet |
| A: | unoriented section | B: | oriented section |
| I: | body part | II: | lip part |
| III: | coating region | | |
| MD: | magnetic field direction | CM: | carbon-based negative electrode active material |

**Claims**

1. A negative electrode manufacturing device for a secondary battery, comprising:

   a slot die comprising an upper block, a lower block, and a slot configured to discharge a negative electrode slurry through a gap between the upper block and the lower block; and
   a coating roll configured to transfer the electrode sheet coated with the negative electrode slurry discharged from the slot die;
   wherein the upper block and the lower block comprise an upper lip and a lower lip forming an outlet at a respective front end of the upper block and the lower block, and
   wherein the upper lip and the lower lip exhibit a magnetism of same polarity.

2. The negative electrode manufacturing device for the secondary battery of claim 1, wherein the upper lip and the lower lip have a magnetic field having an intensity ranging from 500G to 3,000G, and the magnetic field is applied on the negative electrode slurry upon discharge of the negative electrode slurry at the upper and lower lip.

3. The negative electrode manufacturing device for the secondary battery of claim 1, wherein the slot die satisfies the following equation 1:

$$[\text{Equation 1}]$$

$$50 \leq G/D \leq 250$$

   wherein G is an intensity of a magnetic field applied at the upper lip and the lower lip, D is a separation distance of the upper and lower blocks.

4. The negative electrode manufacturing device for the secondary battery of claim 1, wherein the upper lip and the lower lip have a structure comprising at least one of a permanent magnet or an electromagnet.

5. The negative electrode manufacturing device for the secondary battery of claim 1, further comprising a drying part for drying the negative electrode slurry applied to the electrode sheet,
   wherein the drying part is disposed in a position that is reached within 20 seconds from a point where the negative electrode slurry is applied to the electrode sheet.

6. A method of manufacturing the negative electrode for the secondary battery comprising:

magnetically applying the negative electrode slurry to the electrode sheet using the negative electrode manufacturing device for the secondary battery according to claim 1,
wherein the negative electrode slurry comprises the carbon-based negative electrode active material.

7. The method of claim 6, wherein an average thickness of the negative electrode slurry applied to the electrode sheet is greater than a separation distance between the slot of the slot die and the coating roll.

8. The method of claim 6, wherein an average thickness of the negative electrode slurry applied to the electrode sheet is 100 $\mu$m or more.

9. The method of claim 6, wherein applying the negative electrode slurry to the electrode sheet is performed at a speed ranging from 5 m/min to 100 m/min.

10. The method of claim 6, further comprising drying the applied negative electrode slurry to form a negative electrode active layer after applying the negative electrode slurry to the electrode sheet.

11. The method of claim 10, wherein the negative electrode active layer has an alignment degree of the carbon-based negative electrode active material with respect to the surface of the electrode sheet of 0.9 or less, represented by the following equation 2:

[Equation 2]

$$O.I = I_{004}/I_{110}$$

wherein $I_{004}$ is an area of a peak representing a [0,0,4] crystal face in an X-ray diffraction spectroscopy (XRD) measurement of the negative electrode active layer,
$I_{110}$ is an area of a peak representing a [1,1,0] crystal face in an X-ray diffraction spectroscopy (XRD) measurement of the negative electrode active layer.

【FIG. 1】

10

【FIG. 2】

【FIG. 3】

## INTERNATIONAL SEARCH REPORT

| | International application No. |
|---|---|
| | **PCT/KR2023/020176** |

**A. CLASSIFICATION OF SUBJECT MATTER**

**H01M 4/04**(2006.01)i; **H01M 4/587**(2010.01)i; **B05C 5/02**(2006.01)i; **B05C 9/14**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/04(2006.01); B05C 5/02(2006.01); B05D 1/26(2006.01); H01M 10/058(2010.01); H01M 4/1393(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소(carbon), 음극 활물질(negative electrode active material), 슬롯(slot), 간격 (gap), 자석(magnet), 슬러리(slurry), 건조부(drying portion), 도포(coating)

**C. DOCUMENTS CONSIDERED TO BE RELEVANT**

| Category* | Citation of document, with indication, where appropriate, of the relevant passages | Relevant to claim No. |
|---|---|---|
| X | KR 10-2013-0108460 A (TOYOTA JIDOSHA KABUSHIKI KAISHA) 02 October 2013 (2013-10-02)<br>See paragraphs [0014], [0015], [0028]-[0036], [0071]-[0074] and [0077]-[0115]; and figures 1-3, 5 and 9-14. | 1,2,4-6,10,11 |
| Y | | 3,7-9 |
| Y | KR 10-2012-0095159 A (SAMSUNG SDI CO., LTD.) 28 August 2012 (2012-08-28)<br>See paragraphs [0019]-[0031] and [0036]-[0046]; and figures 1-4. | 3,7-9 |
| A | KR 10-2018-0065385 A (SAMSUNG SDI CO., LTD.) 18 June 2018 (2018-06-18)<br>See claims 1-10. | 1-11 |
| A | KR 10-2020-0011227 A (LG CHEM, LTD.) 03 February 2020 (2020-02-03)<br>See claims 1-12. | 1-11 |
| A | JP 2003-010762 A (KONICA CORP.) 14 January 2003 (2003-01-14)<br>See claims 1-10. | 1-11 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 March 2024** | **27 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/020176**

| Patent document cited in search report | | | Publication date (day/month/year) | Patent family member(s) | | | Publication date (day/month/year) |
|---|---|---|---|---|---|---|---|
| KR | 10-2013-0108460 | A | 02 October 2013 | CN | 103314472 | A | 18 September 2013 |
| | | | | EP | 2665112 | A1 | 20 November 2013 |
| | | | | JP | 5858293 | B2 | 10 February 2016 |
| | | | | KR | 10-1573994 | B1 | 02 December 2015 |
| | | | | US | 2013-0280413 | A1 | 24 October 2013 |
| | | | | WO | 2012-095975 | A1 | 19 July 2012 |
| KR | 10-2012-0095159 | A | 28 August 2012 | CN | 102641822 | A | 22 August 2012 |
| | | | | KR | 10-1243573 | B1 | 20 March 2013 |
| KR | 10-2018-0065385 | A | 18 June 2018 | CN | 108172751 | A | 15 June 2018 |
| | | | | KR | 10-2483995 | B1 | 30 December 2022 |
| | | | | US | 10263247 | B2 | 16 April 2019 |
| | | | | US | 2018-0159118 | A1 | 07 June 2018 |
| KR | 10-2020-0011227 | A | 03 February 2020 | | None | | |
| JP | 2003-010762 | A | 14 January 2003 | US | 2003-0140849 | A1 | 31 July 2003 |
| | | | | US | 6726958 | B2 | 27 April 2004 |

Form PCT/ISA/210 (patent family annex) (July 2022)

**EP 4 503 158 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220173302
- KR 1020180048131